# EUROPEAN PATENT APPLICATION

(11) **EP 4 456 275 A1**
(43) Date of publication of application: **30.10.2024**
(21) Application number: 22919496.4
(22) Date of filing: 14.01.2022
(51) Int. Cl.: H01M 50/112, H01M 50/15

(54) **BATTERY, ELECTRIC DEVICE, AND BATTERY MANUFACTURING METHOD AND DEVICE**

(71) Applicant: Contemporary Amperex Technology Co., Limited, Ningde, Fujian 352100 (CN)
(72) Inventor: LI, Quankun, Ningde, Fujian 352100 (CN); CHENG, Qi, Ningde, Fujian 352100 (CN); XING, Chengyou, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2022/072156
(87) International publication number: WO 2023/133848

(57) **Abstract**

Embodiments of the present application provide a battery, an electrical device, a method for manufacturing a battery, and a device for manufacturing a battery, and belong to the technical field of batteries. The battery includes electrode assemblies and a shell assembly. The electrode assembly comprises two tabs with opposite polarities. A plurality of accommodating cavities are formed inside the shell assembly, the accommodating cavity is configured to accommodate at least one of the electrode assemblies, every two adjacent accommodating cavities among the plurality of accommodating cavities share a partition wall, and the partition wall is configured to partition the two adjacent accommodating cavities. The shell assembly includes a plurality of output assemblies configured to output electric energy of the battery, each of the accommodating cavities is correspondingly provided with one of the output assemblies, the output assembly includes two output electrodes with opposite polarities, and the two output electrodes are respectively configured to be electrically connected to the two tabs of the electrode assembly in the corresponding accommodating cavity. The every two adjacent accommodating cavities share a partition wall, which can provide more space for the electrode assembly, thus improving utilization of space inside the shell assembly, and effectively improving the energy density of the battery.

## Description

### TECHNICAL FIELD

The present application relates to the technical field of batteries, and specifically relates to a battery, an electrical device, a method for manufacturing a battery, and a device for manufacturing a battery.

### BACKGROUND

With the development of new energy technologies, batteries are increasingly widely used, such as use in a mobile phone, a laptop, a battery cart, an electric vehicle, an electric airplane, an electric ship, an electric car toy, an electric ship toy, an electric plane toy, and an electric tool.

In battery technologies, it is necessary not only to consider the battery safety, but also to consider the battery performance. A magnitude of energy density of the batteries affects the battery performance. Therefore, how to improve the energy density of the batteries is a technical problem to be urgently solved in the battery technologies.

### SUMMARY OF THE INVENTION

Embodiments of the present application provide a battery, an electrical device, a method for manufacturing a battery, and a device for manufacturing a battery, and can effectively improve the energy density of the battery.

In a first aspect, an embodiment of the present application provides a battery, comprising: electrode assemblies each comprising two tabs with opposite polarities; and a shell assembly with a plurality of accommodating cavities formed inside, wherein the accommodating cavity is configured to accommodate at least one of the electrode assemblies, every two adjacent accommodating cavities among the plurality of accommodating cavities share a partition wall, and the partition wall is configured to partition the two adjacent accommodating cavities; wherein the shell assembly comprises a plurality of output assemblies configured to output electric energy of the battery, each of the accommodating cavities is correspondingly provided with one of the output assemblies, the output assembly comprises two output electrodes with opposite polarities, and the two output electrodes are respectively configured to be electrically connected to the two tabs of the electrode assembly in the corresponding accommodating cavity.

In the above technical solutions, the plurality of accommodating cavities configured to accommodate the electrode assembly are formed in the shell assembly. The every two adjacent accommodating cavities share a partition wall, which can provide more space for the electrode assembly, thus improving utilization of space inside the shell assembly, and effectively improving the energy density of the battery. In addition, each of the accommodating cavities is correspondingly provided with an output assembly. An output assembly and an electrode assembly in a corresponding accommodating cavity form a battery unit. Electric energy generated by the battery unit can be outputted through the two output electrodes of the output assembly, and a series connection, a parallel connection, or a parallel-series connection of a plurality of battery units can be achieved as required.

In some embodiments, the shell assembly comprises: a case, wherein the accommodating cavity and the partition wall are located in the case, and along a first direction, the accommodating cavity forms a first opening at at least one end of the case; and an end cover configured to cover the first opening.

In the above technical solutions, the shell assembly comprises the case and the end cover, and the end cover covers the first opening of the case. The structure is simple, can easily accommodate the electrode assembly in the accommodating cavity, and facilitates assembly of the battery.

In some embodiments, along the first direction, the first opening at one end of the case shares one said end cover.

In the above technical solutions, all first openings at one end of the case may be covered with one end cover, which can effectively reduce the production costs.

In some embodiments, each said partition wall is welded to the end cover, to seal the partition wall and the end cover.

In the above technical solutions, the partition wall is welded to the end cover, which can eliminate a gap between an edge of the partition wall and an inner surface of the end cover, and seal the partition wall and the end cover, so that the two adjacent accommodating cavities (accommodating cavities located on both sides of the partition wall) are independent of each other, thereby reducing the risks of battery failure caused by an electrolyte solution flowing between the two adjacent accommodating cavities due to the gap between the edge of the partition wall and the inner surface of the end cover.

In some embodiments, the end cover comprises: a body part abutting against one end of the case along the first direction; and a plurality of protrusions protruding from an inner surface of the body part, wherein each of the protrusions correspondingly extends into one of the accommodating cavities, an accommodating gap is formed between every two adjacent protrusions among the plurality of protrusions, and the accommodating gap is configured to accommodate a part of the partition wall.

In the above technical solutions, each protrusion of the end cover correspondingly extends into one of the accommodating cavities, and a part of the partition wall is accommodated in the accommodating gap between two adjacent protrusions, thus firmly fixing the end cover and the case, and improving the firmness of the end cover after being mounted on the case. When the end cover is mounted, the mounting position of the end cover can be accurately and quickly found, thus improving the mounting efficiency of the end cover.

In some embodiments, a width of the accommodating gap is larger than or equal to a thickness of the partition wall.

In the above technical solutions, the width of the accommodating gap is larger than or equal to the thickness of the partition wall, so that it is easier to put the partition wall in the accommodating gap when the end cover is mounted, and the end cover can be quickly mounted in place, thus improving the mounting efficiency of the end cover.

In some embodiments, the body part is welded to the case, and a weld mark formed by welding the body part to the case extends circumferentially along an edge of the body part.

In the above technical solutions, the weld mark formed by welding the body part to the case extends circumferentially along the edge of the body part, which not only improves the firmness of the end cover after being mounted on the case, but also improves the sealing performance between the end cover and the case.

In some embodiments, along the first direction, each said first opening at one end of the case is correspondingly provided with one said end cover.

In the above technical solutions, each first opening is correspondingly provided with one end cover. End covers in an end portion of the case are independent of each other. The end covers do not affect each other. Even if one of the end covers is damaged, other end covers will not be affected. In addition, each of the end covers can correspondingly cover one first opening, so that it is easier to isolate the two adjacent accommodating cavities from each other.

In some embodiments, every two adjacent end covers are welded to one said partition wall to seal the partition wall and the end cover.

In the above technical solutions, the every two adjacent end covers are welded to one said partition wall, which can eliminate the gap between the edge of the partition wall and the inner surface of the end cover, and seal the partition wall and the end cover, so that the two adjacent accommodating cavities (accommodating cavities located on both sides of the partition wall) are independent of each other, thereby reducing the risks of battery failure caused by an electrolyte solution flowing between the two adjacent accommodating cavities due to the gap between the edge of the partition wall and the inner surface of the end cover.

In some embodiments, the end cover comprises: a body part abutting against one end of the case along the first direction; and a protrusion protruding from the inner surface of the body part and extending into one of the accommodating cavities.

In the above technical solutions, the body part of the end cover abuts against one end of the case, and the protrusion of the end cover extends into the accommodating cavity, to firmly fix the end cover and the case, and improve the firmness of the end cover after being mounted on the case. When the end cover is mounted, the mounting position of the end cover can be accurately and quickly found, thus improving the mounting efficiency of the end cover.

In some embodiments, along a thickness direction of the partition wall, the body parts of every two adjacent end covers abut against each other, and a distance between the protrusions of the every two adjacent end covers is larger than or equal to the thickness of the partition wall.

In the above technical solutions, the distance between the protrusions of the every two adjacent end covers is larger than or equal to the thickness of the partition wall. During the installation of the end covers, in the case where the body parts of the two adjacent end covers abut against each other, the protrusions are less likely to interfere with the partition wall, thus ensuring that the protrusions can more easily extend into the accommodating cavity, and achieving firm fixation.

In some embodiments, the body part is welded to the case, and a weld mark formed by welding the body part to the case extends circumferentially along an edge of the first opening.

In the above technical solutions, the weld mark formed by welding the body part to the case extends circumferentially along the edge of the first opening, which not only improves the firmness of the end cover after being mounted on the case, but also improves the sealing performance between the end cover and the case.

In some embodiments, a ratio K of a thickness of the partition wall to a wall thickness of the case satisfies: 1≤K≤2.

In the above technical solutions, the ratio of the thickness of the partition wall to the wall thickness of the case is in a range of 1-2, thereby not only ensuring that the partition wall has sufficient strength, but also preventing the partition wall from being too thick and occupying a large space, that is, improving the energy density of the battery, while ensuring the strength of the partition wall.

In some embodiments, along the first direction, the accommodating cavity forms the first opening at either end of the case, and the end cover is provided at either end of the case.

In the above technical solutions, the accommodating cavity forms the first opening at either end of the case. When being accommodated in the accommodating cavity, the electrode assembly may optionally be put in the accommodating cavity from the first opening at any one end of the accommodating cavity, which can effectively improve the assembly efficiency of the battery.

In some embodiments, along the first direction, the two output electrodes in the output assembly are respectively arranged on the end covers located at both ends of the case.

In the above technical solutions, the two output electrodes in the output assembly are arranged on the end covers at both ends of the case respectively, so that electric energy can be outputted from both ends of the case. The two output electrodes are located on different end covers, thereby satisfying the design requirements for large-sized output electrodes.

In some embodiments, the case comprises a first side wall, a second side wall, a third side wall, and a fourth side wall that are sequentially connected end to end; the first side wall and the third side wall are oppositely arranged along a second direction; and the second side wall and the fourth side wall are oppositely arranged along a third direction; wherein the first direction, the second direction, and the third direction are perpendicular to each other, the partition wall is connected to the second side wall and the fourth side wall, and the plurality of accommodating cavities are arranged along the second direction.

In the above technical solutions, the first side wall, the second side wall, the third side wall, and the fourth side wall are sequentially connected end to end to form a rectangular structure, and the inner space of the case is partitioned into a plurality of accommodating cavities through the partition wall. The shell of this structure has a simple structure, can provide a large space for the electrode assembly, and improves the energy density of the battery.

In some embodiments, the first side wall, the second side wall, the third side wall, and the fourth side wall are of an integrally formed structure.

In the above technical solutions, the integrally formed structure of the first side wall, the second side wall, the third side wall, and the fourth side wall of the case can ensure sufficient firmness and sealing performance at an intersection position of two adjacent side walls, and can effectively reduce the manufacturing costs of the case.

In some embodiments, the first direction is consistent with a length direction of the case; the first side wall, the second side wall, and the third side wall are sequentially connected to form a case body, and along the third direction, one side of the case body away from the second side wall is an open side; the accommodating cavity forms a second opening on the open side for the electrode assembly to be put in the accommodating cavity, and the fourth side wall is arranged on the open side to cover the second opening.

In the above technical solutions, the fourth side wall of the case and the case body are split structures, and the electrode assembly can be put in the accommodating cavity from the second opening, so that it is easier to put the electrode assembly in the accommodating cavity, thus improving the case-put-in efficiency of the electrode assembly. After the electrode assembly is put in the accommodating cavity, the second opening can be covered with the fourth side wall.

In some embodiments, the first side wall, the third side wall, and the partition wall are each welded to the fourth side wall.

In the above technical solutions, the first side wall, the third side wall, and the partition wall are each welded to the fourth side wall to improve the firmness of the first side wall after covering the second opening. Further, the first side wall, the third side wall, the partition wall, and the fourth side wall are sealingly connected.

In a second aspect, an embodiment of the present application provides an electrical device, comprising the battery provided in any one embodiment of the above first aspect.

In a third aspect, an embodiment of the present application provides a method for manufacturing a battery, including: providing electrode assemblies, the electrode assemblies each comprising two tabs with opposite polarities; providing a shell assembly with a plurality of accommodating cavities formed inside, wherein every two adjacent accommodating cavities among the plurality of accommodating cavities share a partition wall, and the partition wall is configured to partition the two adjacent accommodating cavities; and accommodating the electrode assemblies in the accommodating cavities, each of the accommodating cavities accommodating at least one of the electrode assemblies; wherein the shell assembly comprises a plurality of output assemblies configured to output electric energy of the battery, each of the accommodating cavities is correspondingly provided with one of the output assemblies, the output assembly comprises two output electrodes with opposite polarities, and the two output electrodes are respectively configured to be electrically connected to the two tabs of the electrode assembly in the corresponding accommodating cavity.

In some embodiments, the shell assembly comprises a case, a first end cover, and a second end cover, the accommodating cavity and the partition wall are both located in the case, the case comprises, along a first direction, a first end and a second end that are opposite, the accommodating cavity forms a first opening at each of the first end and the second end; some accommodating cavities among the plurality of accommodating cavities are first accommodating cavities, the other accommodating cavities are second accommodating cavities, one said first accommodating cavity is arranged between every two adjacent second accommodating cavities; and the two output electrodes of the output assembly are respectively arranged on the first end cover and the second end cover; and the accommodating the electrode assemblies in the accommodating cavities includes: providing one said first end cover at one end of each of the electrode assemblies, and connecting the output electrode on the first end cover to the tab at one end of the electrode assembly; arranging the electrode assembly in the first accommodating cavity, the electrode assembly being put in the first accommodating cavity from the first opening of the first accommodating cavity located at the first end; connecting the first end cover to the first end, so that the first end cover covers the first opening of the first accommodating cavity located at the first end; arranging the second end cover at the second end of the case, so that the second end cover covers the first opening of the first accommodating cavity located at the second end, and connecting the output electrode on the second end cover to the tab at the other end of the electrode assembly located in the first accommodating cavity; arranging the electrode assembly in the second accommodating cavity, the electrode assembly being put in the second accommodating cavity from the first opening of the second accommodating cavity located at the second end; connecting the first end cover to the second end, so that the first end cover covers the first opening of the second accommodating cavity located at the second end; and arranging the second end cover at the first end of the case, so that the second end cover covers the first opening of the second accommodating cavity located at the first end, and connecting the output electrode on the second end cover to the tab at the other end of the electrode assembly located in the second accommodating cavity.

In a fourth aspect, an embodiment of the present application further provides a device for manufacturing a battery, comprising: a first providing apparatus configured to provide electrode assemblies, the electrode assemblies each comprising two tabs with opposite polarities; a second providing apparatus for a shell assembly, wherein a plurality of accommodating cavities are formed inside the shell assembly, every two adjacent accommodating cavities among the plurality of accommodating cavities share a partition wall, and the partition wall is configured to partition the two adjacent accommodating cavities; and an assembling apparatus configured to accommodate the electrode assemblies in the accommodating cavities, each of the accommodating cavities accommodating at least one of the electrode assemblies; wherein the shell assembly comprises a plurality of output assemblies configured to output electric energy of the battery, each of the accommodating cavities is correspondingly provided with one of the output assemblies, the output assembly comprises two output electrodes with opposite polarities, and the two output electrodes are respectively configured to be electrically connected to the two tabs of the electrode assembly in the corresponding accommodating cavity.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle provided in some embodiments of the present application;
FIG. 2 is an exploded view of a battery provided in some embodiments of the present application;
FIG. 3 is a section view of the battery shown in FIG. 2;
FIG. 4 is a partial enlarged view at position A of the battery shown in FIG. 3;
FIG. 5 is an exploded view of a battery provided in some other embodiments of the present application;
FIG. 6 is a section view of the battery shown in FIG. 5;
FIG. 7 is an enlarged view at position B of the battery shown in FIG. 6;
FIG. 8 is a schematic structural diagram of a case provided in some embodiments of the present application;
FIG. 9 is an exploded view of a case provided in some other embodiments of the present application;
FIG. 10 is a flowchart of a method for manufacturing a battery provided in some embodiments of the present application;
FIG. 11 is an assembly diagram of a battery provided in some embodiments of the present application; and
FIG. 12 is a schematic block diagram of a device for manufacturing a battery provided in some embodiments of the present application.

Icons: 10-shell assembly; 11-accommodating cavity; 11a-first accommodating cavity; 11b-second accommodating cavity; 111-first opening; 112-second opening; 12-partition wall; 13-output electrode; 14-case; 141-first side wall; 142-second side wall; 143-third side wall; 144-fourth side wall; 145-open side; 146-first end; 147-second end; 15-end cover; 15a-first end cover; 15b-second end cover; 151-body part; 152-protrusion; 153-accommodating gap; 16-weld mark; 20-electrode assembly; 21-tab; 100-battery; 200-controller; 300-motor; 1000-vehicle; 2000-manufacturing device; 2100-first providing apparatus; 2200-second providing apparatus; 2300-assembling apparatus; X-first direction; Y-second direction; and Z-third direction.

### DETAILED DESCRIPTION

In order to make the objectives, technical solutions, and advantages of embodiments of the present application clearer, the technical solutions in the embodiments of the present application will be clearly described below with reference to the drawings in the embodiments of the present application. Apparently, the embodiments described below are some, instead of all, of the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that, unless otherwise explicitly stipulated and defined, the term "mount," "join," "connect," or "attach" should be understood in a broad sense, such as a fixed connection, a detachable connection, an integrated connection; a direct connection, an indirect connection through an intermediate medium, or an internal connection of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the dimensions such as the thickness, length, and width of various components in the embodiments of the present application shown in the drawings, as well as the dimensions such as the overall thickness, length, and width of the integrated apparatus are illustrative only and shall not impose any limitation on the present application.

In the present application, the "plurality of" refers to more than two (including two).

In the present application, the battery may comprise a lithium-ion secondary battery, a lithium-ion primary battery, a lithium-sulfur battery, or a sodium/lithium-ion battery, a sodium-ion battery, or a magnesium-ion battery, etc., which is not limited in the embodiments of the present application.

The electrode assembly in the battery comprises a positive electrode plate, a negative electrode plate, and a separator. The battery works mainly relying on movement of metal ions between the positive electrode plate and the negative electrode plate. The positive electrode plate comprises a positive electrode current collector and a positive electrode active material layer. The positive electrode active material layer is coated on a surface of the positive electrode current collector. The positive electrode current collector that is not coated with the positive electrode active material layer protrudes from the positive electrode current collector that is coated with the positive electrode active material layer. The positive electrode current collector that is not coated with the positive electrode active material layer serves as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, a surface of the negative electrode current collector is coated with the negative electrode active material layer, the negative electrode current collector that is not coated with the negative electrode active material layer protrudes from the negative electrode current collector that is coated with the negative electrode active material layer, and the negative electrode current collector that is not coated with the negative electrode active material layer serves as a negative tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. The separator may be made from polypropylene (PP), polyethylene (PE), or the like. In addition, the electrode assembly may be a winded structure or a stacked structure, which is not limited in the embodiments of the present application.

A general battery comprises a plurality of battery cells. The battery cells comprise a case and an electrode assembly. The case provides an accommodating space for accommodating the electrode assembly. The plurality of battery cells form the battery through a series connection, a parallel connection, or a parallel-series connection.

The inventors noticed that in the battery, the plurality of battery cells are arranged side by side, electrode assemblies of two adjacent battery cells are separated by two wall layers (walls of two adjacent cases), and there is a gap between the cases of the two adjacent battery cells, thereby resulting in low space utilization and low energy density of the battery.

In view of this, an embodiment of the present application provides a battery. A plurality of accommodating cavities for accommodating an electrode assembly are formed inside a shell assembly. Every two adjacent accommodating cavities among the plurality of accommodating cavities share a partition wall. The shell assembly comprises a plurality of output assemblies configured to output electric energy of the battery, each of the accommodating cavities is correspondingly provided with one of the output assemblies, the output assembly comprises two output electrodes with opposite polarities, and the two output electrodes are respectively configured to be electrically connected to two tabs with opposite polarities of the electrode assembly in the corresponding accommodating cavity.

In such a battery, the every two adjacent accommodating cavities share a partition wall, which can provide more space for the electrode assembly, thus improving utilization of space inside the shell assembly, and effectively improving the energy density of the battery.

In addition, each of the accommodating cavities is correspondingly provided with an output assembly. An output assembly and an electrode assembly in a corresponding accommodating cavity form a battery unit. Electric energy generated by the battery unit can be outputted through the two output electrodes of the output assembly, and a series connection, a parallel connection, or a parallel-series connection of a plurality of battery units can be achieved as required.

The battery described in the embodiment of the present application is adapted to an electrical device.

The electrical device may be a vehicle, a mobile phone, a portable device, a laptop, a ship, a spacecraft, an electric toy, an electric tool, etc. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric plane toys. The electric tool includes metal electric cutting tools, electric grinding tools, assembly electric tools and railway electric tools, such as electric drills, electric grinders, electric wrenches, electric screwdrivers, electric hammers, impact drills, concrete vibrators, and electric planers. The electrical device is not specially limited in the embodiments of the present application.

For ease of description, in the following embodiments, the electrical device is, for example, a vehicle.

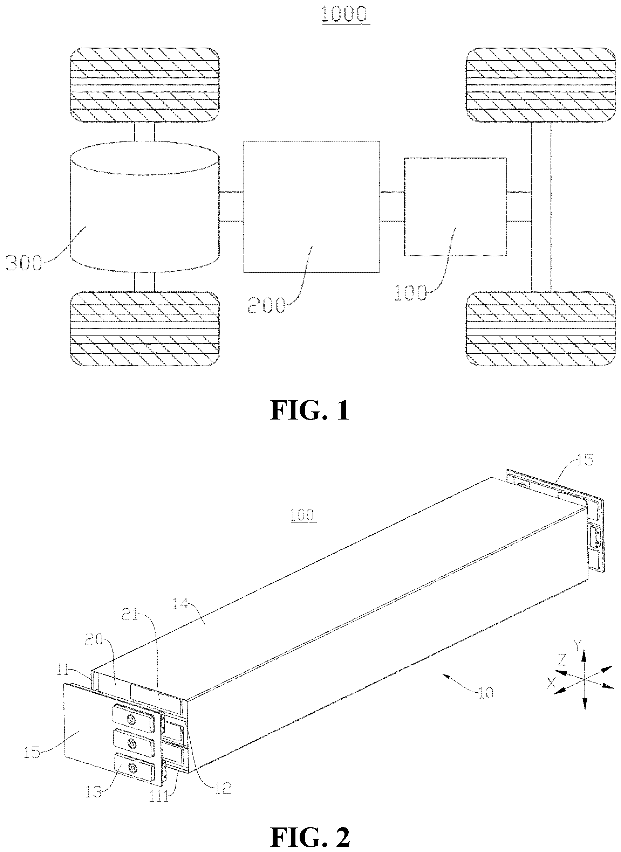

Referring to FIG. 1, FIG. 1 is a schematic structural diagram of a vehicle 1000 provided in some embodiments of the present application. A battery 100 is provided in the vehicle 1000. The battery 100 may be arranged at the bottom, head, or tail of the vehicle 1000. The battery 100 may be used for powering the vehicle 1000. For example, the battery 100 may be used as an operating power source of the vehicle 1000.

The vehicle 1000 may further include a controller 200 and a motor 300. The controller 200 is configured to control the battery 100 to supply power to the motor 300, for example, serve to satisfy operating power demand when the vehicle 1000 is starting, navigating, and running.

In some embodiments of the present application, the battery 100 not only can serve as an operating power source of the vehicle 1000, but also can serve as a driving power source of the vehicle 1000, to provide a driving power for the vehicle 1000 in place of or partially in place of fuel or natural gas.

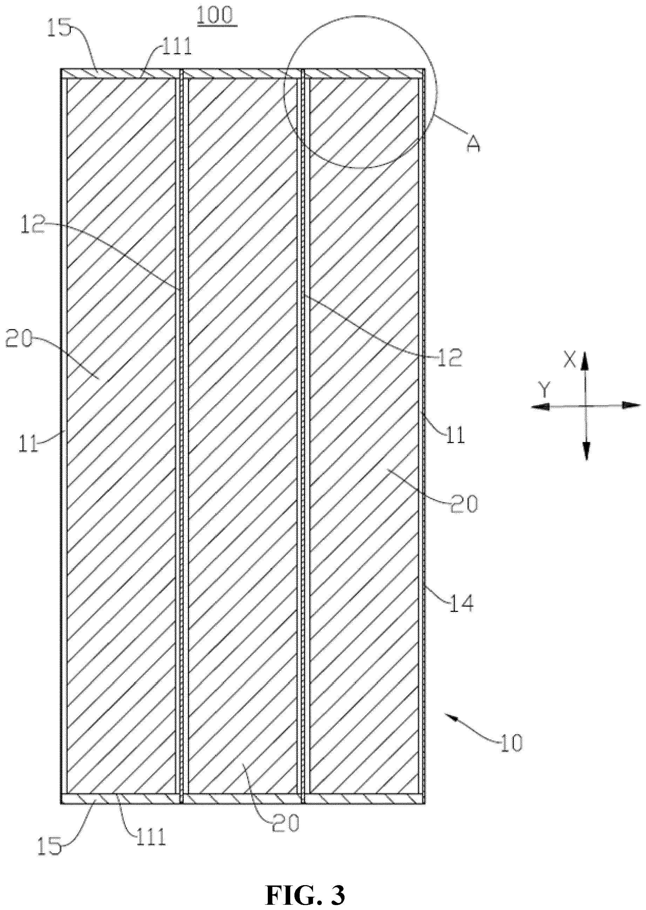

Referring to FIGS. 2 and 3, FIG. 2 is an exploded view of a battery 100 provided in some embodiments of the present application, and FIG. 3 is a section view of the battery 100 shown in FIG. 2. An embodiment of the present application provides a battery 100. The battery 100 comprises a shell assembly 10 and an electrode assembly 20.

The electrode assembly 20 comprises two tabs with opposite polarities 21. A plurality of accommodating cavities 11 are formed inside the shell assembly 10, the accommodating cavities 11 are configured to accommodate at least one of the electrode assemblies 20, every two adjacent accommodating cavities 11 among the plurality of accommodating cavities share a partition wall 12, and the partition wall 12 is configured to partition the two adjacent accommodating cavities 11. The shell assembly 10 comprises a plurality of output assemblies configured to output electric energy of the battery 100, each of the accommodating cavities 11 is correspondingly provided with one of the output assemblies, the output assembly comprises two output electrodes with opposite polarities 13, and the two output electrodes 13 are respectively configured to be electrically connected to the two tabs 21 of the electrode assembly 20 in the corresponding accommodating cavity 11.

The electrode assembly 20 is a component of the battery 100 that reacts electrochemically with an electrolyte solution. The electrode assembly 20 may comprise a positive electrode plate, a negative electrode plate, and a separator. The electrode assembly 20 may be a winded structure formed by winding the positive electrode plate, the separator, and the negative electrode plate, or may be a stacked structure formed by stacked arrangement of the positive electrode plate, the separator, and the negative electrode plate.

The two tabs with opposite polarities 21 in the electrode assembly 20 are a positive tab and a negative tab respectively. The positive tab may be a part of the positive electrode plate that is not coated with the positive electrode active material layer, and the negative tab may be a part of the negative electrode plate that is not coated with the negative electrode active material layer.

The shell assembly 10 is a component that accommodates the electrode assembly 20 and the electrolyte solution. The shell assembly 10 provides an accommodating space for the electrode assembly 20 and the electrolyte solution. The shell assembly 10 may be in various shapes, such as a cuboid or a cylinder.

Each accommodating cavity 11 may accommodate one electrode assembly 20, or may accommodate a plurality of electrode assemblies 20. For example, in FIGS. 2 and 3, each accommodating cavity 11 accommodates one of the electrode assemblies 20. In the shell assembly 10, the plurality of accommodating cavities 11 may be distributed rowwise, that is, the plurality of accommodating cavities 11 may be distributed in one row or in a plurality of rows. If the plurality of accommodating cavities 11 are distributed in one row, a partition wall 12 is formed between every two adjacent accommodating cavities 11 in the arrangement direction of the plurality of accommodating cavities 11. For example, three accommodating cavities 11 arranged in one row are formed inside the shell component 10. There are two partition walls 12 inside the shell component 10, and the two partition walls 12 partition the three accommodating cavities 11. If the plurality of accommodating cavities 11 are distributed in a plurality of rows, two adjacent accommodating cavities 11 in each row may share one of the partition walls 12, and two adjacent accommodating cavities 11 between two adjacent rows may also share the other one of the partition walls 12. If the plurality of accommodating cavities 11 are distributed in two rows, there are two accommodating cavities 11 in each row, and the four accommodating cavities 11 may form a " 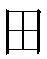 "-shaped structure.

The output assembly is a part of the battery 100 connected to an external element, a component, or a device, etc. The two output electrodes 13 in the output assembly are electrically connected to the two tabs 21 of the electrode assembly 20 in the corresponding accommodating cavity 11 respectively. The output electrode 13 electrically connected to the positive tab in the output assembly is a positive output electrode, and the output electrode 13 electrically connected to the negative tab in the output assembly is a negative output electrode. An electrode assembly 20 in one of the accommodating cavities 11 and a corresponding output assembly may be regarded as one battery unit, and a series connection, a parallel connection, or a parallel-series connection between a plurality of battery units can be achieved through a bus component. The parallel-series connection means that there are both the series connection and the parallel connection between the plurality of battery units. The bus component may be a metal conductor, such as copper, iron, aluminum, stainless steel, or aluminum alloy.

Taking two battery units connected in series as an example, a positive output electrode of an output assembly of one of the battery units is connected to a negative output electrode of the output assembly of the other one of the battery units through a bus component.

In an embodiment of the present application, a plurality of accommodating cavities 11 for accommodating the electrode assembly 20 are formed in the shell assembly 10. Every two adjacent accommodating cavities 11 share a partition wall 12, which can provide more space for the electrode assembly 20, thereby improving utilization of space inside the shell assembly 10, effectively improving the energy density of the battery 100, reducing the weight of the shell assembly 10, saving materials, and reducing the manufacturing costs.

In addition, each of the accommodating cavities 11 is correspondingly provided with an output assembly. An output assembly and an electrode assembly 20 in a corresponding accommodating cavity 11 form a battery unit. Electric energy generated by the battery unit can be outputted through the two output electrodes 13 of the output assembly, and a series connection, a parallel connection, or a parallel-series connection of the plurality of battery units can be achieved as required.

In some embodiments, further referring to FIGS. 2 and 3, the shell assembly 10 comprises a case 14 and an end cover 15. The accommodating cavity 11 and the partition wall 12 are located in the case 14. Along a first direction X, the accommodating cavity 11 forms a first opening 111 at at least one end of the case 14. The end cover 15 is configured to cover the first opening 111.

The case 14 may be made of an insulating material, such as plastic or rubber; or the case 14 may be made of a metal material, such as copper, iron, aluminum, stainless steel, or aluminum alloy. The case 14 may be in various shapes, such as a cuboid or a cylinder. In an embodiment where the case 14 is a cylinder, the first direction X may be an axial direction of the case 14. As shown in FIG. 2, in an embodiment where the case 14 is a cuboid, the first direction X may be a length direction of the case 14.

Along the first direction X, the case 14 may be a hollow structure with one open end, or may be a hollow structure with two opposite open ends. If the case 14 is a hollow structure with one open end, the accommodating cavity 11 forms the first opening 111 at one end of the case 14. For example, three accommodating cavities 11 are formed inside the case 14, and three first openings 111 are formed at one end in the first direction X of the case 14. If the case 14 is a hollow structure with two open ends, the accommodating cavities 11 form first openings 111 at both opposite ends of the case 14. For example, three accommodating cavities 11 are formed inside the case 14, and three first openings 111 are formed at either end in the first direction X of the case 14.

The partition wall 12 is located in the case 14. The partition wall 12 is connected to an inner surface of the case 14. The partition wall 12 may be arranged in parallel to the first direction X. The partition wall 12 and the case 14 may be of an integrally formed structure, or may be separately arranged and connected together, e.g., by welding.

The end cover 15 is a component that covers the first opening 111 of the case 14. The end cover 15 may be a platy structure, and the shape of the end cover 15 may be adapted to the shape of the case 14. If the case 14 is a cuboid, the end cover 15 may be a rectangular plate; and if the case 14 is a cylinder, the end cover 15 may be a cylindrical plate. The number of end covers 15 may be one or more. The number of end covers 15 may be set correspondingly based on the arrangement of the first opening 111. For example, the accommodating cavities 11 form first openings 111 at one end of the case 14. Since there are a plurality of accommodating cavities 11, a plurality of first openings 111 are formed at one end of the case 14. Each of the first openings 111 may be covered with one end cover 15, or all of the first openings 111 may be covered with one end cover 15, or a part (more than two) of the first openings 111 may be covered with one end cover 15, and the remaining part (one or more) of the first openings 111 may be covered with another end cover 15. For another example, the accommodating cavities 11 form first openings 111 at either end of the case 14. Since there are a plurality of accommodating cavities 11, a plurality of first openings 111 are formed at either end of the case 14. For the plurality of first openings 111 at either end of the case 14, each of the first openings 111 may be covered with one end cover 15, or all of the first openings 111 may be covered with one end cover 15, or a part (more than two) of the first openings 111 may be covered with one end cover 15, and the remaining part (one or more) of the first openings 111 may be covered with another end cover 15.

When the accommodating cavity 11 forms a first opening 111 at one end of the case 14, one output electrode 13 in the output assembly may be arranged on the end cover 15 covering the first opening 111, and the other output electrode 13 in the output assembly is arranged at one end of the case 14 away from the end cover 15. When the accommodating cavity 11 forms a first opening 111 at either end of the case 14, one output electrode 13 in the output assembly may be arranged on the end cover 15 covering the first opening 111 at one end of the accommodating cavity 11, and the other output electrode 13 in the output assembly may be arranged on the end cover 15 covering the first opening 111 at the other end of the accommodating cavity 11. For example, the output electrode 13 in the output assembly is an electrode terminal.

In the present embodiment, the first opening 111 of the case 14 is covered with the end cover 15. The structure is simple, can easily accommodate the electrode assembly 20 in the accommodating cavity 11, and facilitates assembly of the battery 100.

In other embodiments, the shell assembly 10 may also be of other structures. For example, the shell assembly 10 comprises a first case and a second case. The first case and the second case are each a hollow structure with one open end. The open end of the first case is connected to the open end of the second case. A part of the partition wall 12 is located in the first case, and the other part of the partition wall 12 is located in the second case.

In some embodiments, further referring to FIGS. 2 and 3, along the first direction X, the first openings 111 at one end of the case 14 share one end cover 15.

It should be noted that the first openings 111 at one end of the case 14 share one end cover 15, and it is not limited that only the first openings 111 at one end of the case 14 share one end cover 15. If the accommodating cavity 11 forms first openings 111 at one end of the case 14, only the first openings 111 at one end of the case 14 share one end cover 15. If the accommodating cavity 11 forms first openings 111 at either end of the case 14, the first openings 111 at one end of the case 14 share one end cover 15, and the first openings 111 at the other end of the case 14 may share one end cover 15, or may not share one end cover 15. For example, each of the first openings 111 at the other end of the case 14 is correspondingly provided with one end cover 15.

In the present embodiment, all first openings 111 at one end of the case 14 may be covered with one end cover 15, which can effectively reduce the production costs.

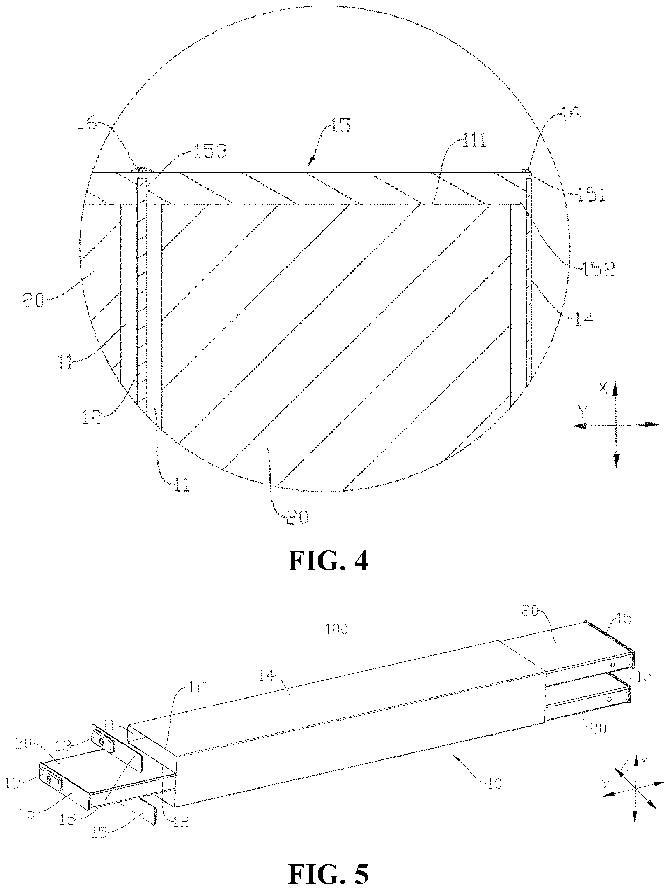

In some embodiments, further referring to FIG. 4, FIG. 4 is a partial enlarged view at position A of the battery 100 shown in FIG. 3. Each partition wall 12 is welded to the end cover 15 to seal the partition wall 12 and the end cover 15.

A weld mark 16 formed by welding the partition wall 12 to the end cover 15 extends along an edge of the partition wall 12. It can be understood that when the partition wall 12 is welded to the end cover 15, the welding trajectory is consistent with an extension direction of an edge of the partition wall 12. The edge referred to here refers to an edge of the partition wall 12 facing the end cover 15. The partition wall 12 and the end cover 15 may be welded together by penetration welding.

In the present embodiment, the partition wall 12 is welded to the end cover 15, which can eliminate a gap between an edge of the partition wall 12 and an inner surface of the end cover 15, and seal the partition wall 12 and the end cover 15, so that two adjacent accommodating cavities 11 (accommodating cavities 11 located on both sides of the partition wall 12) are independent of each other, thereby reducing the risks of failure of the battery 100 caused by an electrolyte solution flowing between the two adjacent accommodating cavities 11 due to the gap between the edge of the partition wall 12 and the inner surface of the end cover 15.

In some embodiments, further referring to FIG. 4, the end cover 15 comprises a body part 151 and a plurality of protrusions 152. The body part 151 abuts against one end of the case 14 along the first direction X. The plurality of protrusions 152 protrude from an inner surface of the body part 151, wherein each of the protrusions 152 correspondingly extends into one of the accommodating cavities 11, an accommodating gap 153 is formed between every two adjacent protrusions 152 among the plurality of protrusions, and the accommodating gap 153 is configured to accommodate a part of the partition wall 12.

The body part 151 is a part of the end cover 15 abutting against an end portion of the case 14. The body part 151 abuts against one end in the first direction X of a side wall of the case 14. The shape of the body part 151 may be adapted to the shape of the case 14. Each of the protrusions 152 is a part of the end cover 15 extending into the accommodating cavity 11. The shape of the protrusion 152 may be adapted to the shape of the accommodating cavity 11. The inner surface of the body part 151 is a surface of the body part 151 facing the electrode assembly 20.

The accommodating gap 153 can provide an avoidance space for the partition wall 12 to ensure that the protrusion 152 can smoothly extend into the accommodating cavity 11. In an embodiment where the end cover 15 is welded to the partition wall 12, the position of the weld mark 16 formed by welding the end cover 15 to the partition wall 12 corresponds to the accommodating gap 153.

In the present embodiment, each protrusion 152 of the end cover 15 correspondingly extends into one of the accommodating cavities 11, and a part of the partition wall 12 is accommodated in the accommodating gap 153 between two adjacent protrusions 152, thus firmly fixing the end cover 15 and the case 14, and improving the firmness of the end cover 15 after being mounted on the case 14. When the end cover 15 is mounted, the mounting position of the end cover 15 can be accurately and quickly found, thus improving the mounting efficiency of the end cover 15.

In some embodiments, a width of the accommodating gap 153 is larger than or equal to a thickness of the partition wall 12.

The width of the accommodating gap 153 is a size of the accommodating gap 153 in a thickness direction of the partition wall 12. It can be understood that if the width of the accommodating gap 153 is larger than the width of the partition wall 12, the two adjacent protrusions 152 will not simultaneously contact with the partition wall 12 in the thickness direction of the partition wall 12. If the width of the accommodating gap 153 is equal to the width of the partition wall 12, the two adjacent protrusions 152 each contact with the partition wall 12 in the thickness direction of the partition wall 12.

In the present embodiment, the width of the accommodating gap 153 is larger than or equal to the thickness of the partition wall 12, so that it is easier to put the partition wall 12 in the accommodating gap 153 when the end cover 15 is mounted, and the end cover 15 can be quickly mounted in place, thus improving the mounting efficiency of the end cover 15.

In some embodiments, further referring to FIG. 4, the body part 151 is welded to the case 14, and a weld mark 16 formed by welding the body part 151 to the case 14 extends circumferentially along an edge of the body part 151.

It can be understood that the weld mark 16 formed by welding the body part 151 to the case 14 is adapted to the shape of the body part 151. If the body part 151 is rectangular, the weld mark 16 formed by welding the body part 151 to the case 14 is rectangular; and if the body part 151 is circular, the weld mark 16 formed by welding the body part 151 to the case 14 is circular. The body part 151 may be welded to the case 14 by penetration welding or seam welding. If the body part 151 is welded to the case 14 by penetration welding, the body part 151 and the case 14 may be welded together along a thickness direction of the body part 151 (first direction X). If the body part 151 is welded to the case 14 by seam welding, the body part 151 and the case 14 may be welded together along the thickness direction of the partition wall 12.

In the present embodiment, the weld mark 16 formed by welding the body part 151 to the case 14 extends circumferentially along the edge of the body part 151, which not only improves the firmness of the end cover 15 after being mounted on the case 14, but also improves the sealing performance between the end cover 15 and the case 14.

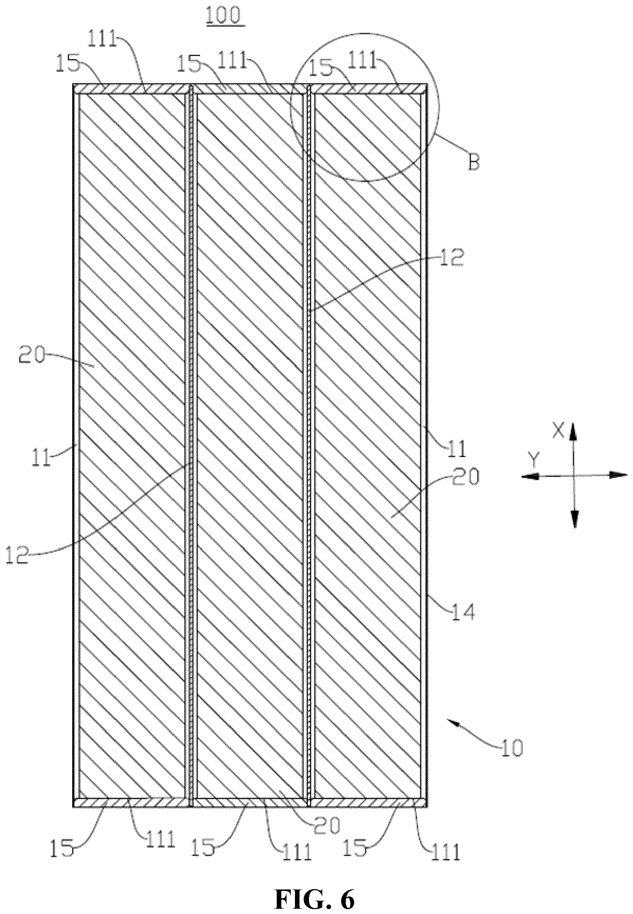

In some embodiments, referring to FIGS. 5 and 6, FIG. 5 is an exploded view of a battery 100 provided in some other embodiments of the present application, and FIG. 6 is a section view of the battery 100 shown in FIG. 5. Along the first direction X, each first opening 111 at one end of the case 14 is correspondingly provided with one end cover 15.

It should be noted that each first opening 111 at one end of the case 14 is correspondingly provided with one end cover 15, and it is not limited that only each first opening 111 at one end of the case 14 is correspondingly provided with one end cover 15. If the accommodating cavity 11 forms first openings 111 at one end of the case 14, only each of the first openings 111 at one end of the case 14 is correspondingly provided with one end cover 15. If the accommodating cavity 11 forms first openings 111 at either end of the case 14, only each of the first openings 111 at one end of the case 14 is correspondingly provided with one end cover 15, and each of the first openings 111 at the other end of the case 14 may be correspondingly provided with one end cover 15, or more than one of the first openings 111 may share one end cover 15.

In the present embodiment, each first opening 111 is correspondingly provided with one end cover 15. End covers 15 in an end portion of the case 14 are independent of each other. The end covers 15 do not affect each other. Even if one of the end covers 15 is damaged, the other end cover 15 will not be affected. In addition, each of the end covers 15 can correspondingly cover one of the first openings 111, so that it is easier to isolate two adjacent accommodating cavities 11 from each other.

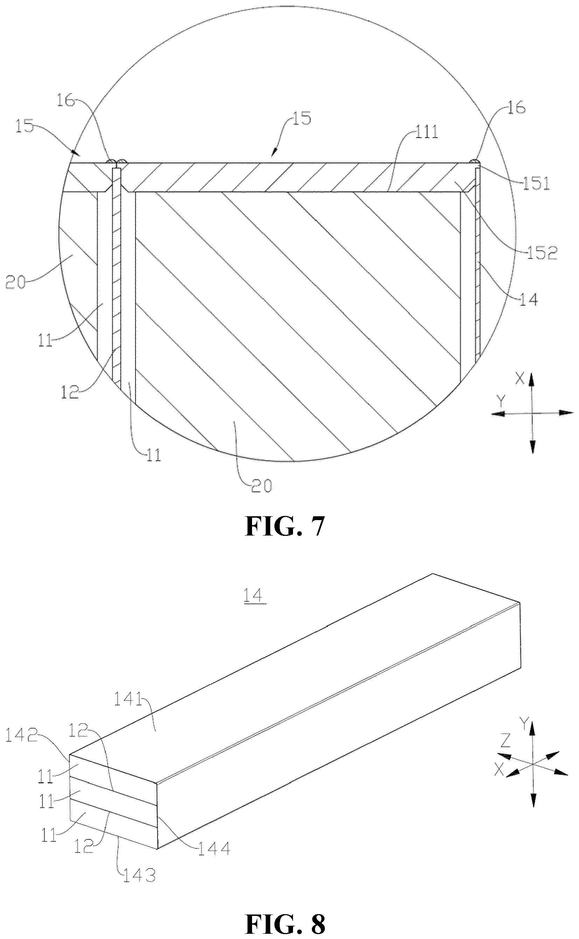

In some embodiments, referring to FIG. 7, FIG. 7 is an enlarged view at position B of the battery 100 shown in FIG. 6. Every two adjacent end covers 15 are welded to a partition wall 12 to seal the partition wall 12 and the end covers 15.

A weld mark 16 formed by welding one of the end covers 15 to the partition wall 12 extends along an edge of the partition wall 12. It can be understood that when the end cover 15 is welded to the partition wall 12, the welding trajectory is consistent with an extension direction of an edge of the partition wall 12. The edge referred to here refers to an edge of the partition wall 12 facing the end cover 15. The partition wall 12 and the end cover 15 may be welded together by penetration welding.

In the present embodiment, the every two adjacent end covers 15 are welded to a partition wall 12, which can eliminate a gap between an edge of the partition wall 12 and an inner surface of each of the end covers 15, and seal the partition wall 12 and the end covers 15, so that two adjacent accommodating cavities 11 (accommodating cavities 11 located on both sides of the partition wall 12) are independent of each other, thereby reducing the risks of failure of the battery 100 caused by an electrolyte solution flowing between the two adjacent accommodating cavities 11 due to the gap between the edge of the partition wall 12 and the inner surface of each end cover 15.

In some embodiments, further referring to FIG. 7, the end cover 15 comprises a body part 151 and a protrusion 152. The body part 151 abuts against one end of the case 14 along the first direction X. The protrusion protrudes from an inner surface of the body part 151, and extends into one of the accommodating cavities 11.

The body part 151 is a part of the end cover 15 abutting against an end portion of the case 14. The body part 151 abuts against one end in the first direction X of a side wall of the case 14, and the body part 151 abuts against one end in the first direction X of the partition wall 12. The shape of the body part 151 may be adapted to the shape of the case 14. Each of the protrusions 152 is a part of the end cover 15 extending into the accommodating cavity 11. The shape of the protrusion 152 may be adapted to the shape of the accommodating cavity 11.

In the present embodiment, the body part 151 of the end cover 15 abuts against one end of the case 14, and the protrusion 152 of the end cover 15 extends into the accommodating cavity 11, to firmly fixing the end cover 15 and the case 14, and improve the firmness of the end cover 15 after being mounted on the case 14. When the end cover 15 is mounted, the mounting position of the end cover 15 can be accurately and quickly found, thus improving the mounting efficiency of the end cover 15.

In some embodiments, along a thickness direction of the partition wall 12, the body parts 151 of every two adjacent end covers 15 abut against each other, and a distance between the protrusions 152 of the every two adjacent end covers 15 is larger than or equal to a thickness of the partition wall 12.

For two adjacent end covers 15, since the body parts 151 of the two adjacent end covers 15 abut against each other, if the distance between the protrusions 152 of the two adjacent end covers 15 is larger than the thickness of the partition wall 12, the protrusions 152 of the two adjacent end covers 15 will not simultaneously contact with the partition wall 12 in the thickness direction of the partition wall 12. If the distance between the protrusions 152 of the two adjacent end covers 15 is equal to the thickness of the partition wall 12, the protrusions 152 of the two adjacent end covers 15 each contact with the partition wall 12 in the thickness direction of the partition wall 12.

In the present embodiment, the distance between the protrusions 152 of the every two adjacent end covers 15 is larger than or equal to the thickness of the partition wall 12. During the installation of the end covers 15, in the case where the body parts 151 of the two adjacent end covers 15 abut against each other, the protrusions 152 are less likely to interfere with the partition wall 12, thus ensuring that the protrusions 152 can more easily extend into the accommodating cavity 11, and achieving firm fixation.

In some embodiments, further referring to FIG. 7, the body part 151 is welded to the case 14, and a weld mark 16 formed by welding the body part 151 to the case 14 extends circumferentially along an edge of the first opening 111.

It can be understood that the weld mark 16 formed by welding the body part 151 to the case 14 is adapted to the shape of the first opening 111. For example, the first opening 111 is rectangular, and the weld mark 16 formed by welding the body part 151 to the case 14 is rectangular. For another example, the first opening 111 is circular, and the weld mark 16 formed by welding the body part 151 to the case 14 is circular.

In an embodiment where the end cover 15 is welded to the partition wall 12, the body part 151 of the end cover 15 may be welded to the partition wall 12. The weld mark 16 formed by welding the end cover 15 to the partition wall 12 is a part of the weld mark 16 formed by welding the body part 151 to the case 14. For example, the weld mark 16 formed by welding the body part 151 to the case 14 is rectangular. The weld mark 16 formed by welding the end cover 15 to the partition wall 12 is one side of the rectangular weld mark 16.

In the present embodiment, the weld mark 16 formed by welding the body part 151 to the case 14 extends circumferentially along the edge of the first opening 111, which not only improves the firmness of the end cover 15 after being mounted on the case 14, but also improves the sealing performance between the end cover 15 and the case 14.

In some embodiments, a ratio K of a thickness of the partition wall 12 to a wall thickness of the case 14 satisfies: 1≤K≤2.

It should be noted that, no matter in the embodiment where the first openings 111 at one end of the case 14 share one end cover 15, or in the embodiment where each of first openings 111 at one end of the case 14 is correspondingly provided with one end cover 15, the ratio of the thickness of the partition wall 12 to the wall thickness of the case 14 may be in a range of 1-2.

For example, in the embodiment where the first openings 111 at one end of the case 14 share one end cover 15, the ratio K between the thickness of the partition wall 12 and the wall thickness of the case 14 is 1. In the embodiment where each of the first openings 111 at one end of the case 14 is correspondingly provided with one end cover 15, the ratio K between the thickness of the partition wall 12 and the wall thickness of the case 14 is 2, so that the partition wall 12 has sufficient wall thickness for the body parts 151 of the two adj acent end covers 15 to abut, to ensure the stability of the end covers 15.

In the present embodiment, the ratio of the thickness of the partition wall 12 to the wall thickness of the case 14 is in the range of 1-2, thereby not only ensuring that the partition wall 12 has sufficient strength, but also preventing the partition wall 12 from being too thick and occupying a large space, that is, improving the energy density of the battery 100, while ensuring the strength of the partition wall 12.

In some embodiments, referring to FIGS. 2 and 5, along the first direction X, the accommodating cavity 11 forms the first openings 111 at either end of the case 14, and the end cover 15 is provided at either end of the case 14.

For example, in FIG. 2, along the first direction X, the first openings 111 at one end of the case 14 share one end cover 15, and the first openings 111 at the other end of the case 14 share the other end cover 15.

For example, in FIG. 5, along the first direction X, each of the first openings 111 at one end of the case 14 is correspondingly provided with one end cover 15, and each of the first openings 111 at the other end of the case 14 is also correspondingly provided with one end cover 15.

In the present embodiment, the accommodating cavity 11 forms the first openings 111 at either end of the case 14. When being accommodated in the accommodating cavity 11, the electrode assembly 20 may optionally be put in the accommodating cavity 11 from one of the first openings 111 at any one end of the accommodating cavity 11, which can effectively improve the assembly efficiency of the battery 100.

In some embodiments, further referring to FIGS. 2 and 5, along the first direction X, the two output electrodes 13 in the output assembly are arranged on the end covers 15 located at both ends of the case 14 respectively.

For example, the output electrodes 13 are electrode terminals arranged on the end covers 15. It can be understood that in the output assembly, one of the output electrodes 13 is a positive electrode terminal, and the other output electrode 13 is a negative electrode terminal.

In the present embodiment, the two output electrodes 13 in the output assembly are arranged on the end covers 15 at both ends of the case 14 respectively, so that electric energy can be outputted from both ends of the case 14. The two output electrodes 13 are located on different end covers 15, thereby satisfying the design requirements for large-sized output electrodes 13.

In some embodiments, referring to FIG. 8, FIG. 8 is a schematic structural diagram of a case 14 provided in some embodiments of the present application. The case 14 comprises a first side wall 141, a second side wall 142, a third side wall 143, and a fourth side wall 144 that are sequentially connected end to end. The first side wall 141 and the third side wall 143 are oppositely arranged along a second direction Y The second side wall 142 and the fourth side wall 144 are oppositely arranged along a third direction Z. The first direction X, the second direction Y, and the third direction Z are perpendicular to each other, the partition wall 12 is connected to the second side wall 142 and the fourth side wall 144, and the plurality of accommodating cavities 11 are arranged along the second direction Y

The first side wall 141, the second side wall 142, the third side wall 143, and the fourth side wall 144 may all be rectangular platy structures. The case 14 formed by sequentially connecting the first side wall 141, the second side wall 142, the third side wall 143, and the fourth side wall 144 end to end is a hollow structure with both open ends in the first direction X. The partition wall 12 is connected to the second side wall 142 and the fourth side wall 144 to partition the inner space of the case 14 into a plurality of accommodating cavities 11 arranged along the second direction Y.

In the present embodiment, the first side wall 141, the second side wall 142, the third side wall 143, and the fourth side wall 144 are sequentially connected end to end to form a rectangular structure, and the inner space of the case 14 is partitioned into a plurality of accommodating cavities 11 through the partition wall 12. The case 14 of this structure has a simple structure, can provide a large space for the electrode assembly 20, and improves the energy density of the battery 100.

In some embodiments, further referring to FIG. 8, the first side wall 141, the second side wall 142, the third side wall 143, and the fourth side wall 144 are of an integrally formed structure. This structure can ensure sufficient firmness and sealing performance at the intersection position of two adjacent side walls, and can effectively reduce the manufacturing costs of the case 14.

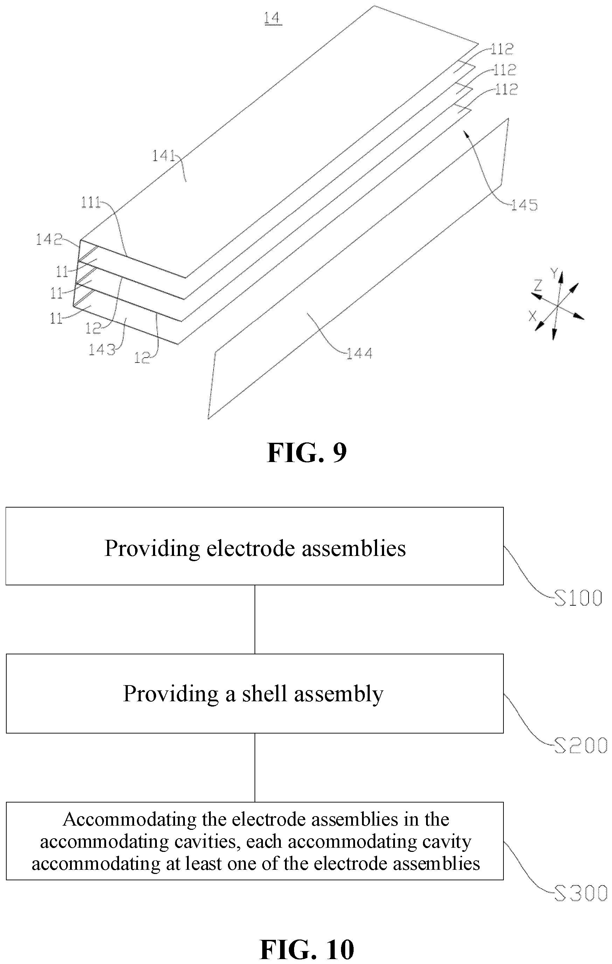

In some embodiments, referring to FIG. 9, FIG. 9 is an exploded view of a case 14 provided in some other embodiments of the present application. The first direction X is consistent with a length direction of the case 14. The first side wall 141, the second side wall 142, and the third side wall 143 are sequentially connected to form a case body, and along the third direction Z, one side of the case body away from the second side wall 142 is an open side 145. The accommodating cavity 11 forms a second opening 112 on the open side 145 for the electrode assembly 20 to be put in the accommodating cavity 11, and a fourth side wall 144 is provided on the open side 145 to cover the second opening 112.

The first direction X is consistent with the length direction of the case 14, that is, the accommodating cavity 11 forms a first opening 111 at either end in the length direction of the case 14. It can be understood that a size of the case 14 in a width direction and its size in a height direction are each smaller than its size in the length direction. For example, the second direction Y is consistent with the height direction of the case 14, and the third direction Z is consistent with the width direction of the case 14.

In the present embodiment, split structures are used for the fourth side wall 144 of the case 14 and the case body, and the electrode assembly 20 can be put in the accommodating cavity 11 from the second opening 112, so that it is easier to put the electrode assembly 20 in the accommodating cavity 11, thus improving the case-put-in efficiency of the electrode assembly 20. After the electrode assembly 20 is put in the accommodating cavity 11, the second opening 112 can be covered with the fourth side wall 144.

In some embodiments, the first side wall 141, the third side wall 143, and the partition wall 12 are all welded to the fourth side wall 144.

For example, a welding trajectory between the first side wall 141 and the fourth side wall 144 is consistent with an extension direction of an edge of the fourth side wall 144 against which the first side wall 141 abuts. A welding trajectory between the third side wall 143 and the fourth side wall 144 is consistent with an extension direction of an edge of the fourth side wall 144 against which the third side wall 143 abuts. A welding trajectory between the partition wall 12 and the fourth side wall 144 is consistent with an extension direction of an edge of the fourth side wall 144 against which the partition wall 12 abuts.

In the present embodiment, the first side wall 141, the third side wall 143, and the partition wall 12 are each welded to the fourth side wall 144 to improve the firmness of the first side wall 141 after covering the second opening 112. Further, the first side wall 141, the third side wall 143, the partition wall 12, and the fourth side wall 144 are sealingly connected.

An embodiment of the present application provides an electrical device, comprising the battery 100 provided in any one embodiment in the above first aspect.

The electrical device may be a device of the battery 100 used in any one of the above embodiments.

In addition, as shown in FIGS. 5 and 6, an embodiment of the present application provides a square battery 100, comprising a shell assembly 10 and an electrode assembly 20. The shell assembly 10 comprises a case 14. A plurality of accommodating cavities 11 configured to accommodate the electrode assembly 20 are formed inside the case 14, a partition wall 12 is provided inside the case 14, and every two adjacent accommodating cavities 11 share a partition wall 12. The accommodating cavities 11 form first openings 111 at both ends of the case 14. The case 14 further comprises an end cover 15. The end cover 15 is configured to cover the first openings 111. One of the first openings 111 is correspondingly provided with one end cover 15. Two end covers 15 corresponding to each of the accommodating cavities 11 are each provided with an electrode terminal. The electrode terminals on the two end covers 15 are electrically connected to two tabs with opposite polarities 21 (not shown in FIGS. 5 and 6) of the electrode assembly 20 in the accommodating cavities 11. Every two adjacent accommodating cavities 11 of the case 14 share a partition wall 12, which can provide more space for the electrode assembly 20, thus improving utilization of space inside the shell assembly 10, and effectively improving the energy density of the battery 100.

Referring to FIG. 10, FIG. 10 is a flow chart of a method for manufacturing a battery 100 provided in some embodiments of the present application. An embodiment of the present application provides a method for manufacturing a battery 100. The manufacturing method includes:

S100: providing electrode assemblies 20, the electrode assemblies 20 each comprising two tabs with opposite polarities 21;

S200: providing a shell assembly 10, wherein a plurality of accommodating cavities 11 are formed inside the shell assembly 10, every two adjacent accommodating cavities 11 among the plurality of accommodating cavities share a partition wall 12, and the partition wall 12 is configured to partition the two adjacent accommodating cavities 11; and

S300: accommodating the electrode assembly 20 in one of the accommodating cavities 11, each of the accommodating cavities 11 accommodating at least one of the electrode assemblies 20.

The shell assembly 10 comprises a plurality of output assemblies configured to output electric energy of the battery 100, each of the accommodating cavities 11 is correspondingly provided with one of the output assemblies, the output assembly comprises two output electrodes with opposite polarities 13, and the two output electrodes 13 are respectively configured to be electrically connected to the two tabs 21 of the electrode assembly 20 in the corresponding accommodating cavity 11.

It should be noted that, in the above method, the sequence of step S100 and step S200 is not limited. Step S100 may be first executed, and then step S200 may be executed; or step S200 may be first executed, and then step S100 may be executed.

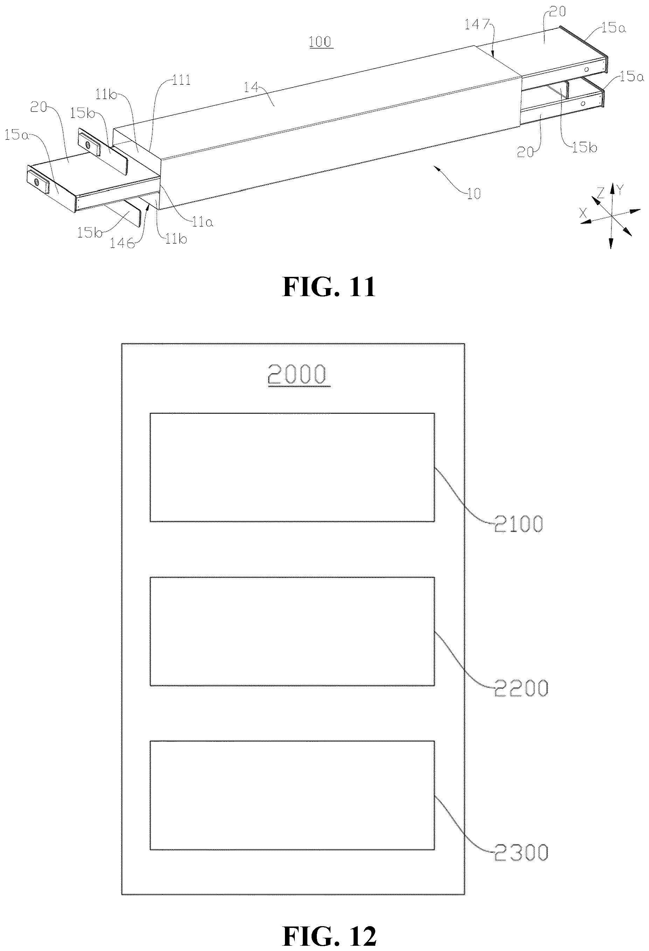

In some embodiments, referring to FIG. 11, FIG. 11 is an assembly diagram of a battery 100 provided in some embodiments of the present application. The shell assembly 10 comprises a case 14, a first end cover 15a, and a second end cover 15b. The accommodating cavity 11 and the partition wall 12 are both located in the case 14. Along the first direction X, the case 14 comprises a first end 146 and a second end 147 that are opposite, and the accommodating cavity 11 forms first openings 111 at each of the first end 146 and the second end 147. Among a plurality of accommodating cavities 11, some accommodating cavities 11 are first accommodating cavities 11a, and other accommodating cavities 11 are second accommodating cavities 11b. One first accommodating cavity 11a is arranged between every two adjacent second accommodating cavities 11b. The two output electrodes 13 in the output assembly are arranged on the first end cover 15a and the second end cover 15b respectively.

The step S300 includes:
S310: providing a first end cover 15a at one end of each electrode assembly 20, and connecting the output electrode 13 on the first end cover 15a to a tab 21 at one end of the electrode assembly 20.

For example, the output electrode 13 on the first end cover 15a is an electrode terminal mounted on the first end cover 15a. The output electrode 13 on the first end cover 15a may be connected to the tab 21 at one end of the electrode assembly 20 by welding.

S320: arranging the electrode assembly 20 in a first accommodating cavity 11a, the electrode assembly 20 being put in the first accommodating cavity 11a from a first opening 111 of the first accommodating cavity 11a located at the first end 146.

It can be understood that in a process of putting the electrode assembly 20 in the first accommodating cavity 11a, one end of the electrode assembly 20 away from the first end cover 15a is put in the first accommodating cavity 11a from the first opening 111 of the first accommodating cavity 11a located at the first end 146.

S330: connecting the first end cover 15a to the first end 146, so that the first end cover 15a covers the first opening 111 of the first accommodating cavity 11a located at the first end 146.

For example, the first end cover 15a may be connected to the first end 146 by welding. In this step, the first end cover 15a is an end cover corresponding to the electrode assembly 20 located in the first accommodating cavity 11a.

S340: arranging the second end cover 15b at the second end 147 of the case 14, so that the second end cover 15b covers the first opening 111 of the first accommodating cavity 11a located at the second end 147, and connecting the output electrode 13 on the second end cover 15b to the tab 21 at the other end of the electrode assembly 20 located in the first accommodating cavity 11a.

For example, the output electrode 13 on the second end cover 15b may be connected to the tab 21 at the other end of the electrode assembly 20 located in the first accommodating cavity 11a by welding. The output electrode 13 on the second end cover 15b is an electrode terminal mounted on the second end cover 15b.

S350: arranging the electrode assembly 20 in a second accommodating cavity 11b, the electrode assembly 20 being put in the second accommodating cavity 11b from a first opening 111 of the second accommodating cavity 11b located at the second end 147.

It can be understood that in a process of putting the electrode assembly 20 in the second accommodating cavity 11b, one end of the electrode assembly 20 away from the first end cover 15a is put in the second accommodating cavity 11b from the first opening 111 of the second accommodating cavity 11b located at the second end 147.

S360: connecting the first end cover 15a to the second end 147, so that the first end cover 15a covers the first opening 111 of the second accommodating cavity 11b located at the second end 147.

For example, the first end cover 15a may be connected to the second end 147 by welding. In this step, the first end cover 15a is an end cover corresponding to the electrode assembly 20 located in the second accommodating cavity 11b.

S370: arranging the second end cover 15b at the first end 146 of the case 14, so that the second end cover 15b covers the first opening 111 of the second accommodating cavity 11b located at the first end 146, and connecting the output electrode 13 on the second end cover 15b to the tab 21 at the other end of the electrode assembly 20 located in the second accommodating cavity 11b.

For example, the output electrode 13 on the second end cover 15b may be connected to the tab 21 at the other end of the electrode assembly 20 located in the second accommodating cavity 11b by welding.

In the present embodiment, the plurality of accommodating cavities 11 in the shell assembly 10 are divided into first accommodating cavities 11a and second accommodating cavities 11b, and a part of the electrode assembly 20 is put in the first accommodating cavities 11a from the first end 146 of the case 14, and the other part of the electrode assembly 20 is put in the second accommodating cavities 11b from the second end 147 of the case 14, which can improve the assembly efficiency of the battery 100.

In addition, for example, there are two second accommodating cavities 11b and one first accommodating cavity 11a, the first accommodating cavity 11a is located between the two second accommodating cavities 11b. After the electrode assembly 20 is mounted in the first accommodating cavity 11a, when it is necessary to weld the output electrode 13 on the second end cover 15b to the tab 21 at the other end of the electrode assembly 20 in the first accommodating cavity 11a, the electrode assembly 20 is not provided in the second accommodating cavities 11b, so that it is easier to weld the output electrode 13 on the second end cover 15b to the tab 21, thus ensuring the welding quality. After the electrode assembly 20 is mounted in the second accommodating cavities 11b, when it is necessary to weld the output electrode 13 on the second end cover 15b to the tab 21 at the other end of the electrode assembly 20 in the second accommodating cavities 11b, the electrode assembly 20 in the two second accommodating cavities 1 1b are respectively located on both sides of the electrode assembly 20 in the first accommodating cavity 11a, so that when the second end cover 15b is welded to the tab 21, they are not vulnerable to the influence of the first end cover 15a corresponding to the electrode assembly 20 located in the first accommodating cavity 11a. The welding is more convenient, and ensures the welding quality.

It should be noted that the battery 100 provided in the above embodiments may be referred to for relevant structure of the battery 100 manufactured using the manufacturing method provided in the above embodiments, which will not be repeated here.

Referring to FIG. 12, FIG. 12 is a schematic block diagram of a device 2000 for manufacturing a battery provided in some embodiments of the present application. An embodiment of the present application further provides a device 2000 for manufacturing a battery 100. The manufacturing device 2000 comprises a first providing apparatus 2100, a second providing apparatus 2200, and an assembling apparatus 2300.

The first providing apparatus 2100 is configured to provide an electrode assembly 20. The electrode assembly 20 comprises two tabs with opposite polarities 21. The second providing apparatus 2200 is configured to provide a shell assembly 10. A plurality of accommodating cavities 11 are formed inside the shell assembly 10, every two adjacent accommodating cavities 11 among the plurality of accommodating cavities share a partition wall 12, and the partition wall 12 is configured to partition the two adjacent accommodating cavities 11. The assembling apparatus 2300 is configured to accommodate the electrode assembly 20 in the accommodating cavity 11. Each of the accommodating cavities 11 accommodates at least one of the electrode assemblies 20.

The shell assembly 10 comprises a plurality of output assemblies configured to output electric energy of the battery 100, each of the accommodating cavities 11 is correspondingly provided with one of the output assemblies, the output assembly comprises two output electrodes with opposite polarities 13, and the two output electrodes 13 are respectively configured to be electrically connected to the two tabs 21 of the electrode assembly 20 in the corresponding accommodating cavity 11.

It should be noted that the battery 100 provided in the above embodiments may be referred to for relevant structure of the battery 100 manufactured using the manufacturing device 2000 provided in the above embodiments, which will not be repeated here.

It should be noted that the embodiments in the present application and the features in the embodiments may be combined with each other in case of no conflict.

The above embodiments are only used to illustrate the technical solutions of the present application, and are not intended to limit the present application. For those skilled in the art, the present application may have various modifications and alterations. Any modification, equivalent replacement, improvement, and the like made within the spirit and principle of the present application should be encompassed within the scope of protection of the present application.

## Claims

1. A battery, comprising:
electrode assemblies each comprising two tabs with opposite polarities; and
a shell assembly with a plurality of accommodating cavities formed inside, wherein the accommodating cavity is configured to accommodate at least one of the electrode assemblies, every two adjacent accommodating cavities among the plurality of accommodating cavities share a partition wall, and the partition wall is configured to partition the two adjacent accommodating cavities;
wherein the shell assembly comprises a plurality of output assemblies configured to output electric energy of the battery, each of the accommodating cavities is correspondingly provided with one of the output assemblies, the output assembly comprises two output electrodes with opposite polarities, and the two output electrodes are respectively configured to be electrically connected to the two tabs of the electrode assembly in the corresponding accommodating cavity.

2. The battery according to claim 1, wherein the shell assembly comprises:
a case, wherein the accommodating cavity and the partition wall are located in the case, and along a first direction, the accommodating cavity forms a first opening at at least one end of the case; and
an end cover configured to cover the first opening.

3. The battery according to claim 2, wherein along the first direction, the first opening at one end of the case shares one said end cover.

4. The battery according to claim 3, wherein each said partition wall is welded to the end cover, to seal the partition wall and the end cover.

5. The battery according to claim 3 or 4, wherein the end cover comprises:
a body part abutting against one end of the case along the first direction; and
a plurality of protrusions protruding from an inner surface of the body part, wherein each of the protrusions correspondingly extends into one of the accommodating cavities, an accommodating gap is formed between every two adjacent protrusions among the plurality of protrusions, and the accommodating gap is configured to accommodate a part of the partition wall.

6. The battery according to claim 5, wherein a width of the accommodating gap is larger than or equal to a thickness of the partition wall.

7. The battery according to claim 5 or 6, wherein the body part is welded to the case, and a weld mark formed by welding the body part to the case extends circumferentially along an edge of the body part.

8. The battery according to claim 2, wherein along the first direction, each said first opening at one end of the case is correspondingly provided with one said end cover.

9. The battery according to claim 8, wherein every two adjacent end covers are welded to one said partition wall to seal the partition wall and the end cover.

10. The battery according to claim 8 or 9, wherein the end cover comprises:
a body part abutting against one end of the case along the first direction; and
a protrusion protruding from an inner surface of the body part and extending into the accommodating cavity.

11. The battery according to claim 10, wherein along a thickness direction of the partition wall, the body parts of every two adjacent end covers abut against each other, and a distance between the protrusions of the every two adjacent end covers is larger than or equal to a thickness of the partition wall.

12. The battery according to claim 10 or 11, wherein the body part is welded to the case, and a weld mark formed by welding the body part to the case extends circumferentially along an edge of the first opening.

13. The battery according to any one of claims 2-12, wherein a ratio K of a thickness of the partition wall to a wall thickness of the case satisfies: 1≤K≤2.

14. The battery according to any one of claims 2-13, wherein along the first direction, the accommodating cavity forms the first opening at either end of the case, and the end cover is provided at either end of the case.

15. The battery according to claim 14, wherein along the first direction, the two output electrodes in the output assembly are respectively arranged on the end covers located at both ends of the case.

16. The battery according to claim 14 or 15, wherein the case comprises a first side wall, a second side wall, a third side wall, and a fourth side wall that are sequentially connected end to end;
the first side wall and the third side wall are oppositely arranged along a second direction; and
the second side wall and the fourth side wall are oppositely arranged along a third direction;
wherein the first direction, the second direction, and the third direction are perpendicular to each other, the partition wall is connected to the second side wall and the fourth side wall, and the plurality of accommodating cavities are arranged along the second direction.

17. The battery according to claim 16, wherein the first side wall, the second side wall, the third side wall, and the fourth side wall are of an integrally formed structure.

18. The battery according to claim 16, wherein the first direction is consistent with a length direction of the case;
the first side wall, the second side wall, and the third side wall are sequentially connected to form a case body, and along the third direction, one side of the case body away from the second side wall is an open side; and
the accommodating cavity forms a second opening on the open side for the electrode assembly to be put in the accommodating cavity, and the fourth side wall is arranged on the open side to cover the second opening.

19. The battery according to claim 18, wherein the first side wall, the third side wall, and the partition wall are each welded to the fourth side wall.

20. An electrical device, comprising the battery according to any one of claims 1-19.

21. A method of manufacturing a battery, comprising:
providing electrode assemblies, the electrode assemblies each comprising two tabs with opposite polarities;
providing a shell assembly with a plurality of accommodating cavities formed inside, wherein every two adjacent accommodating cavities among the plurality of accommodating cavities share a partition wall, and the partition wall is configured to partition the two adjacent accommodating cavities; and
accommodating the electrode assemblies in the accommodating cavities, each of the accommodating cavities accommodating at least one of the electrode assemblies;
wherein the shell assembly comprises a plurality of output assemblies configured to output electric energy of the battery, each of the accommodating cavities is correspondingly provided with one of the output assemblies, the output assembly comprises two output electrodes with opposite polarities, and the two output electrodes are respectively configured to be electrically connected to the two tabs of the electrode assembly in the corresponding accommodating cavity.

22. The method for manufacturing a battery according to claim 21, wherein the shell assembly comprises a case, a first end cover, and a second end cover, the accommodating cavity and the partition wall are both located in the case, the case comprises, along a first direction, a first end and a second end that are opposite, the accommodating cavity forms a first opening at each of the first end and the second end; some accommodating cavities among the plurality of accommodating cavities are first accommodating cavities, the other accommodating cavities are second accommodating cavities, one said first accommodating cavity is arranged between every two adjacent second accommodating cavities; and the two output electrodes of the output assembly are respectively arranged on the first end cover and the second end cover; and
the accommodating the electrode assemblies in the accommodating cavities comprises:
providing one said first end cover at one end of each of the electrode assemblies, and connecting the output electrode on the first end cover to the tab at one end of the electrode assembly;
arranging the electrode assembly in the first accommodating cavity, the electrode assembly being put in the first accommodating cavity from the first opening of the first accommodating cavity located at the first end;
connecting the first end cover to the first end, so that the first end cover covers the first opening of the first accommodating cavity located at the first end;
arranging the second end cover at the second end of the case, so that the second end cover covers the first opening of the first accommodating cavity located at the second end, and connecting the output electrode on the second end cover to the tab at the other end of the electrode assembly located in the first accommodating cavity;
arranging the electrode assembly in the second accommodating cavity, the electrode assembly being put in the second accommodating cavity from the first opening of the second accommodating cavity located at the second end;
connecting the first end cover to the second end, so that the first end cover covers the first opening of the second accommodating cavity located at the second end; and
arranging the second end cover at the first end of the case, so that the second end cover covers the first opening of the second accommodating cavity located at the first end, and connecting the output electrode on the second end cover to the tab at the other end of the electrode assembly located in the second accommodating cavity.

23. A device for manufacturing a battery, comprising:
a first providing apparatus configured to provide electrode assemblies, the electrode assemblies each comprising two tabs with opposite polarities;
a second providing apparatus configured to provide a shell assembly with a plurality of accommodating cavities formed inside, wherein every two adjacent accommodating cavities among the plurality of accommodating cavities share a partition wall, and the partition wall is configured to partition the two adjacent accommodating cavities; and
an assembling apparatus configured to accommodate the electrode assemblies in the accommodating cavities, each of the accommodating cavities accommodating at least one of the electrode assemblies;
wherein the shell assembly comprises a plurality of output assemblies configured to output electric energy of the battery, each of the accommodating cavities is correspondingly provided with one of the output assemblies, the output assembly comprises two output electrodes with opposite polarities, and the two output electrodes are respectively configured to be electrically connected to the two tabs of the electrode assembly in the corresponding accommodating cavity.
